# FASCICULE DE BREVET EUROPEEN

(11) **EP 0 383 711 B1**
(45) Date de publication et mention de la délivrance du brevet: **30.11.1994**
(21) Numéro de dépôt: 90460008.7
(22) Date de dépôt: 16.02.1990
(51) Int. Cl.: H04L 1/00, H04L 1/12

(54) **Modem à mode de repli sécurisé, notamment pour le réseau téléphonique commuté**
Modem mit alternativem Sicherungsverfahren, insbesondere für das Fernsprechwahlnetz
Modem with a secure alternative mode, particularly for a switched telephone network

(30) Priorité: 16.02.1989 FR 8902210
(43) Date de publication de la demande: 22.08.1990
(73) Titulaire: FRANCE TELECOM, 75015 Paris (FR); TELEDIFFUSION DE FRANCE S.A., 92542 Montrouge Cédex (FR)
(72) Inventeur: Botrel, José, F-35340 Liffre (FR); Brière, Joseph, F-35135 Chantepie (FR); Danneville, Bernard, F-35340 Liffre (FR)
(74) Mandataire: Corlau, Vincent

(56) Documents cités:
- EP-A- 0 217 570
- US-A- 3 697 947
- US-A- 4 047 151
- US-A- 4 483 012

## Description

Le domaine de l'invention est celui des systèmes de transmission de données comprenant des équipements de terminaison de circuits de données (ETCD) à modulation/démodulation d'au moins une fréquence porteuse par un signal utile sous forme d'un train binaire source.

L'invention concerne plus particulièrement les ETCD comprenant d'une part un mode normal de transmission, et d'autre part au moins un mode de repli sélectivement activé notamment en cas de perturbation importante de la ligne de transmission. L'invention fournit plus précisément un principe de mode de repli sécurisé susceptible aussi bien de se substituer à des modes de repli existants, que de fournir un mode de repli à des modems n'en possédant pas. L'invention trouve une application avantageuse dans le cas de l'utilisation du réseau téléphonique commuté (RTC) à des fins de transmission de données. Toutefois, elle s'applique également à d'autres supports de la transmission de données.

Le nouveau principe de fonctionnement d'un mode de repli sécurisé de l'invention constitue d'autre part un perfectionnement aux modems conformes aux normes CCITT du domaine. Toutefois, clairement, la mise en oeuvre de l'invention ne se limite pas aux normes CCITT existantes.

D'une manière générale, le RTC conçu pour le transport du signal de paroles subit des perturbations d'origines diverses qui, si elles ont une influence négligeable sur la qualité du service téléphonique, ont des conséquences désastreuses sur un service de transmission de données. Ceci est particulièrement vrai pour les parties terminales (réseau local) du RTC où la structure du réseau est relativement complexe et met en oeuvre une grande diversité d'équipements.

Les perturbations, notamment sous forme de bruit impulsif, proviennent par exemple de la diaphonie, des impulsions de systèmes de taxation, ou encore des désynchronisations épisodiques entre les commutateurs.

La perturbation introduite par un bruit impulsif introduit des effets variant suivant le principe de modulation de données utilisées. Suivant la norme V23, on obtiendra généralement un bit faux en ligne. Dans le cas où ce bit faux correspond à un bit de synchronisation caractère ("START" ou "STOP"), l'ETTD sera incapable de récupérer immédiatement la synchronisation, et on aura perdu jusqu'à 5 ou 6 caractères consécutifs.

Dans le cadre de la modulation différentielle de phases de la norme V27ter, il y aura propagation de l'erreur sur deux tribits consécutifs, ce qui correspond à au moins deux bits erronés dans un paquet de six bits (l'utilisation du code de Gray autour de la rosace des décalages de phases permettant de limiter le nombre de bits erronés par tribit).

L'effet perturbateur prend en outre des proportions beaucoup plus importantes lorsque le signal a été soumis à une étape de brassage, dans le but de rompre les trop longues séries de 0 ou de 1. Le traitement de brassage consiste par exemple à diviser le signal utile par un polynôme de degré 7 (en norme V27ter : 1 + x⁻*⁶* + x⁻*⁷*), ce qui rend le train binaire aléatoire. Toutefois, il est clair qu'un tel traitement propage les erreurs au décodage. Selon la norme V27ter, une perturbation physique de type impulsif sera ainsi in fine à l'origine de cinq à six bits faux sur une séquence de 9 à 13 bits.

De façon connue, on peut envisager notamment quatre tentatives de remède:
- l'utilisation d'un protocole de transmission en couche supérieure tel que HDLC. Toutefois, cette solution obère le débit, et présente une faible efficacité lorsque le canal est très perturbé, en conduisant à de fréquentes répétitions du signal à chaque erreur détectée.
- l'utilisation en couche supérieure d'un code autocorrecteur, par exemple un codage en bloc de type Reed Solomon. Toutefois, ces opérations de codage/décodage étant mises en oeuvre en dehors des modems, en général dans l'ETTD, présentent une complexité importante puisqu'ils doivent corriger des paquets d'erreurs entiers du fait notamment de l'effet propagateur d'erreur de la modulation différentielle, et notoirement de l'étape de brassage.
- l'utilisation d'un mode de transmission moins fragile lorsque le réseau est particulièrement perturbé. On peut ainsi par exemple substituer un modem V23 à un modem V27ter. Clairement, cette solution n'est pas optimale, car elle réduit très fortement le débit de transmission.
- l'utilisation de modems à mode de repli. De façon connue, les modes de repli de modems, tels que prévus par exemple par les normes CCITT, consistent généralement à effectuer une réduction de la rapidité de modulation. L'objectif poursuivi est d'accorder plus de temps à l'opération de modulation, en réduisant le débit de transmission. Ainsi, pour la norme V23, on transmet les données suivant un principe de modulation de fréquence à deux états (l'état binaire 1 correspond à la transmission d'une fréquence de 1300 Hz, et l'état binaire 0 à une fréquence de 2100 Hz). En mode de repli, la norme prévoit un débit maximum de 600 bits par seconde, sur une largeur de bande plus faible (1 = 1300 Hz ; 0 = 1700 Hz).

Suivant la norme V27ter, pour prendre un autre exemple, on effectue la transmission de données synchrones à 4800 bits par seconde (mode normal), ou 2400 bits par seconde (mode de repli). En mode normal, le principe utilisé est la modulation différentielle de phase à huit états d'une porteuse de fréquence 1800 Hz, ce qui donne une rapidité de modulation de 1600 bauds (4800 bits par seconde). En mode de repli, la modulation est de type différentiel à quatre états, avec une rapidité de 1200 bauds, et donc un débit de 2400 bits par seconde.

Or, les déposants ont constaté que ce mode de repli ne fournit pas de résultat satisfaisant, notamment dans le cas où le réseau téléphonique commuté est affecté de bruit impulsif. Des campagnes de mesures menées par les déposants ont en effet mis en évidence que, sur le RTC, aucune différence significative n'apparaît entre le taux de perturbation des modulations à 1200 bauds (V23 et V 26bis), et à 1600 bauds (V27ter). Le type de modulation (modulation de phase ou modulation par déplacement de fréquence) n'a d'autre part pas d'influence significative sur le taux de perturbation.

On connaît également le document de brevet US n° 4.047.151 (RYD-BECK) qui concerne un système de transmission d'informations analogiques à travers un canal de communication dont les caractéristiques de transmission peuvent évoluer dans le temps. Lorsque le canal de communication est de bonne qualité, les informations analogiques sont numérisées et le train d'impulsions obtenu est envoyé de l'émetteur vers le récepteur (via un satellite notamment) par paquets de 8 bits formant un mot. Si le canal de communication est perturbé, c'est-à-dire si le rapport signal sur bruit au récepteur diminue, le système de transmission passe en mode de repli, ce qui permet de détecter et/ou de corriger les erreurs de transmission.

Ce mode de repli consiste à remplacer au moins un (ou plusieurs) des bits les moins significatifs du mot à transmettre par un (ou plusieurs) bit(s) du type CRC, calculé(s) à partir d'un certain nombre de bits les plus significatifs du mot à transmettre. L'information transmise comprenant le(s) bit(s) de détection et/ou de correction d'erreur garde ainsi la même taille qu'une information transmise sur un canal non perturbé. La vitesse de transmission des données est donc constante quelque soit la qualité du canal de communication.

Cependant, ce dispositif concerne une transmission de signaux sources analogiques, tels que des signaux représentatifs d'un signal sonore, ce qui implique des contraintes beaucoup moins exigeantes de restitution du signal à la réception, que pour des signaux sources numériques. Son principe consiste ainsi à combattre les perturbations en tenant compte uniquement des bits de poids les plus forts, et en substituant des bits de redondance aux bits de poids les plus faibles.

Ce système ne peut donc convenir à une transmission de trains d'impulsions où tous les bits doivent être transmis sans erreur.

L'invention a pour objectif de pallier ces inconvénients de l'état de la technique.

Plus précisément, un premier objectif de l'invention est de fournir un système de transmission de données présentant une bonne efficacité contre les perturbations du canal de transmission. Le système de l'invention est notamment particulièrement approprié aux perturbations du RTC, dont les inventeurs ont pu mettre en évidence qu'elles sont essentiellement dûes à du bruit impulsif.

Un autre objectif de l'invention est de fournir un système de transmission de données, comportant un nouveau mode de repli du mode de transmission que l'on peut qualifier de mode de repli sécurisé, mis en oeuvre sans système complexe et tout en permettant de maintenir un débit de transmission proche du débit en mode normal. De plus, le mode de repli sécurisé de l'invention est essentiellement transparent au type de modulation et à un éventuel mode de brassage.

Un objectif complémentaire de l'invention est de fournir des modes de transmission qui présentent la plus grande compatibilité technologique possible avec les normes existantes, notamment les normes CCITT concernant les modems.

Ces objectifs, ainsi que d'autres qui apparaîtront par la suite, sont atteints à l'aide d'un système de transmission de données comprenant des équipements de terminaison de circuits de données, chacune desdits équipements de terminaison de circuits de données comprenant d'une part des premiers moyens de transmission selon un mode normal, et d'autre part des seconds moyens de transmission selon au moins un mode de repli sélectivement activés notamment en cas de perturbation importante de la ligne de transmission, lesdits premiers moyens de transmission selon un mode normal comprenant des premiers moyens de modulation/démodulation d'au moins une première fréquence porteuse de transmission au moyen d'un premier train binaire source,
lesdits seconds moyens de transmission selon au moins un mode de repli comprenant des moyens de construction d'un second train binaire en ajoutant aux données dudit premier train binaire source des données supplémentaires d'autocorrection et des moyens de modulation/démodulation d'au moins une seconde fréquence porteuse de transmission au moyen dudit second train binaire,
et lesdites données supplémentaires d'autocorrection étant constituées par des éléments binaires d'autocorrection élaborés à partir dudit premier train binaire source par mise en oeuvre d'un code correcteur d'erreurs de type systématique, lesdits éléments binaires d'autocorrection étant insérés entre des séquences d'origine d'éléments binaires du premier train binaire source.

La porteuse de transmission du mode de repli sécurisé de l'invention est avantageusement la porteuse du mode normal, pour des raisons de simplification du modem. Mais il est également possible d'utiliser une porteuse différente, par exemple la porteuse prévue pour le mode de repli normalisé dans le cas des modems CCITT existants.

De façon avantageuse, le correcteur d'erreurs est du type convolutif.

Préférentiellement, chaque élément numérique de modulation de la seconde fréquence porteuse s'exprime sur N états (N≧ 2), et le code correcteur d'erreurs utilisé est de rendement (N-1)/N.

Avantageusement, lesdits moyens de construction dudit second train binaire comprennent des moyens permettant de regrouper par (N-1)-uplets des bits d'origine dudit premier train binaire, et des moyens de concaténation de chaque (N-1)-uplet de bits d'origine avec un N-ième bit d'autocorrection.

Cette séquence est avantageusement constituée par le prélèvement sélectif de bits dans une fenêtre mobile découpant le train binaire.

Avantageusement, lesdits seconds moyens de transmission selon au moins un mode de repli comprennent des moyens de décodage d'un second train binaire reçu, lesdits moyens de décodage mettant en oeuvre un décodage à seuil.

Dans un mode de réalisation avantageux, compatible notamment avec les principes de transmission en modulation différentielle de phase, chacun des éléments numériques de modulation de la seconde fréquence porteuse est un tribit, et le code correcteur est de type entrelacé de façon que chaque tribit émis par les seconds moyens de transmission selon au moins un mode de repli sécurisé soit constitué d'un doublet de bits d'origine du premier train binaire source, et d'un troisième bit de redondance, le bit de redondance du tribit de rang j du second train binaire étant un bit d'autocorrection égal au résultat de la somme modulo 2 de :
- d'une part les bits impairs des doublets de rang j, j-r, j-(6r+1), j-(8r+3) dans le premier train binaire source ;
- d'autre part les bits pairs des doublets de rang j, j-2r, j-(4r+1), j-(7r+2) dans le premier train binaire source,

où r est un facteur d'entrelacement dont la valeur est au moins égale à 2.

Avantageusement, les seconds moyens de transmission comprennent des moyens permettant d'ajuster la valeur du facteur d'entrelacement en fonction des caractéristiques du canal de transmission.

D'autres caractéristiques et avantages de l'invention apparaîtront à la lecture de la description suivante d'un mode de réalisation préférentiel de l'invention, donné à titre illustratif et non limitatif, et des dessins annexés dans lesquels :
- la figure 1 représente le diagramme spatial illustratif du principe de modulation différentiel de phase selon la norme V27ter CCITT ;
- la figure 2 est le tableau de correspondance entre les sauts de phase du diagramme de la figure 1, et les tribits codés correspondants ;
- la figure 3 est un tableau illustratif de l'effet d'une perturbation de type impulsive sur un signal de données transmis selon l'avis V27ter ;
- la figure 4 est un schéma général schématisant de façon imagée l'implantation d'un codeur d'insertion de moyens d'autocorrection du signal transmis, dans une chaîne de traitement d'un équipement de terminaison de circuits de données ;
- la figure 5 est un schéma illustrant le principe de fonctionnement d'un codeur compatible avec un modem de type V27ter CCITT ;
- la figure 6 schématise le fonctionnement d'un décodeur compatible avec le codeur de la figure 5 ;
- la figure 7 est un schéma synoptique simplifié et partiel d'un mode de réalisation préférentiel d'une carte modulateur équipée d'un codeur, selon l'invention ;
- la figure 8 est un chronogramme des signaux principaux échangés entre les modules de la carte modulateur de la figure 7 ;
- la figure 9 est un schéma synoptique simplifié et partiel d'un mode de réalisation préférentiel de la carte "procédure réception" équipée d'un décodeur, selon l'invention ;
- la figure 10 est un chronogramme des signaux principaux échangés entre les modules de la carte "procédure réception" de la figure 9.

Le mode de réalisation qui va être décrit ci-après se rapporte plus particulièrement à la mise en oeuvre d'un système de transmission de données, résistant au bruit impulsif, et compatible avec le principe de transmission de la norme V27ter du CCITT. Mais on notera que l'invention s'applique aussi bien, par exemple, de façon évidente aux principes des avis V23, V29, V32 et V33.

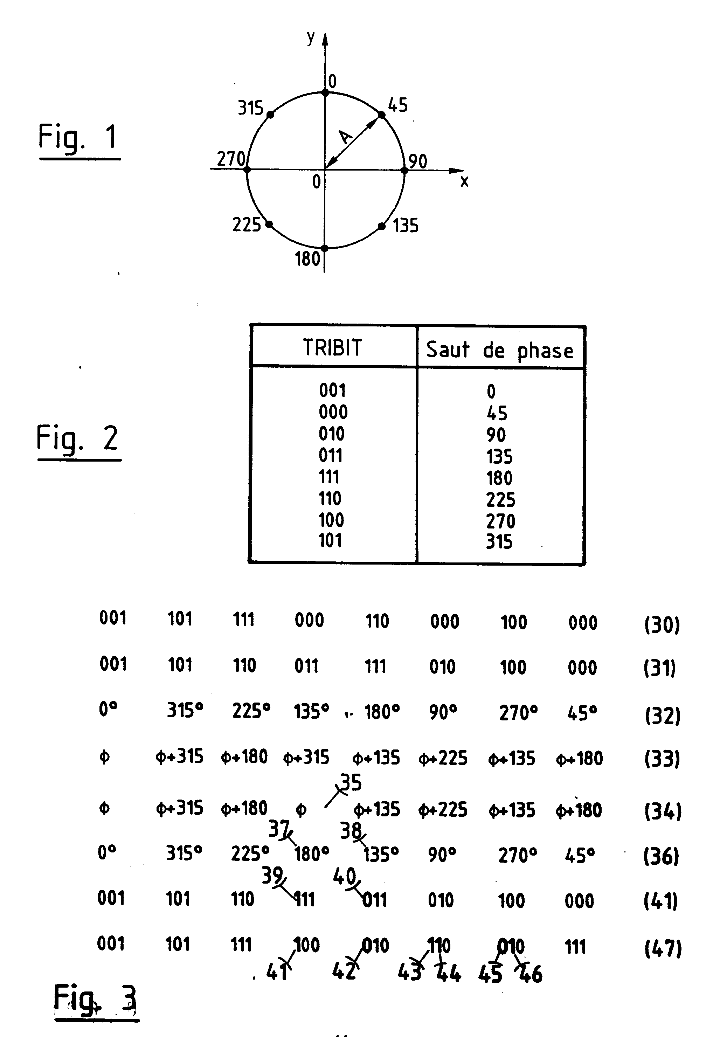

La modulation définie par l'avis V27ter du CCITT est destinée à la transmission en mode synchrone de données sur le RTC au débit de 4800 bits par seconde pour une rapidité de modulation de 1600 bauds. La porteuse de fréquence 1800 Hz est modulée en phase, comme représenté en figure 1. Huit sauts de phase différents correspondent chacun à une configuration d'un tribit donné, comme montré dans le tableau de correspondance de la figure 2. L'affectation des tribits à chaque saut de phase est effectué de façon à minimiser la distance de Hamming entre deux positions de phases consécutives. Ceci permet de minimiser le nombre d'erreurs bit résultant d'une erreur minime de décodage de phase.

A la réception, le modem détermine la phase de la porteuse. La différence avec la phase estimée à l'instant précédent donne la valeur du saut de phase, et donc le tribit correspondant. Le train binaire obtenu est ensuite éventuellement soumis à un désembrouilleur.

Les effets d'une perturbation de type impulsif sur le signal transmis sont schématisés en figure 3.

La première ligne 30 du tableau de la figure 3 représente une séquence de huit tribits, formant un premier train binaire source, à émettre.

Ce premier train binaire source 30 subit une opération d'embrouillage, par brassage. L'opération de brassage a consisté à diviser la séquence source 30 par un polynôme de degré 7 (1 + x⁻*⁶* + x⁻*⁷*), ce qui permet d'obtenir la séquence 31.

Le codage de la séquence 31, en appliquant le principe de modulation différentielle de phase illustré en figures 1 et 2, fournit les changements de phase de la porteuse tels que représentés en ligne 32 de la figure 3. Chaque changement de phase correspond à un tribit de la séquence brassée 31.

Si l'on considère que la phase initiale de la porteuse est φ, la succession des phases de la porteuse, en appliquant les changements de phase de la ligne 32, fournit la séquence de la ligne 33.

La ligne 34 traduit le cas où une perturbation en ligne a amené à détecter une séquence légèrement différente, au récepteur. La séquence 34 diffère de la séquence 33 par l'échantillon 35, qui a été reçu comme étant égal à la phase initiale φ de la porteuse, au lieu de la phase φ + 315.

Le décodage de cette séquence de phase amène alors à restituer les sauts de phase de la ligne 36. On constate que les sauts de phase restitués présentent deux erreurs par rapport à la séquence de phase initial 32, à savoir les sauts de phase 37 et 38. Ces erreurs se traduisent par deux erreurs 39 et 40 dans la séquence 41 de tribit avant débrouillage, et par six erreurs 41 à 46 dans la séquence 47 de tribits obtenus après débrouillage. Ces six bits erronés 41 à 46 constituent un paquet d'erreurs de longueur 11.

L'analyse des différentes configurations possibles de la séquence source 30 montre qu'une perturbation introduisant une erreur sur la détermination de la phase de la porteuse à la réception engendre un paquet d'erreurs d'une longueur comprise entre 9 et 13 bits, et comportant 5 ou 6 bits faux.

Le principe du système de transmission de données, avec moyens d'autocorrection, selon l'invention, répond de façon étonnamment efficace aux problèmes constatés suivants :
- les campagnes de mesures effectuées sur le RTC ont montré, de façon inattendue, que les perturbations d'origines physiques diverses affectant le réseau sont analogues à des perturbations dûes à du bruit impulsif : elles sont de durée faible par rapport à la rapidité des modulations utilisées, et n'affectent en général qu'un seul état de ces modulations.
- il existe sur le marché des modems normalisés pour lesquels un fonctionnement en mode de repli est prévu sur la base d'une modulation moins rapide. Dans le cas d'une utilisation sur le RTC où le bruit impulsif est la principale source de perturbations, ce mode de repli ne garantit à l'usager aucune amélioration de la qualité de service, et lorsque le fonctionnement en mode normal est de qualité insuffisante, il en est de même du fonctionnement en mode repli.
- le réseau téléphonique n'est pas adapté à un service de transmission de données à large couverture c'est-à-dire pour lequel tout abonné au téléphone est utilisateur potentiel. Il convient donc de sécuriser les liaisons de transmission de données avec un taux d'erreur résiduel analogue à celui des réseaux de transmission de données dédiés.
- il importe de sauvegarder les investissements industriels réalisés ou futurs dans le domaine des terminaux et des modems et par conséquent tout mécanisme de sécurisation doit être le plus compatible possible avec les équipements existants.

Le système de sécurisation proposé repose sur un nouveau mode de repli garantissant une qualité de service équivalente à celle fournie par les réseaux de transmission de données dédiés. Le principe général du système consiste à utiliser une partie des ressources du débit binaire émis en ligne pour sécuriser la liaison par la mise en oeuvre d'un code correcteur d'erreurs.

Pour des raisons de compatibilité avec les équipements existants, ce code est du type convolutif. Son efficacité résulte d'une part de l'adéquation de son dimensionnement avec les perturbations qu'il doit combattre, et d'autre part à sa mise en oeuvre en aval du système d'embrouillage et en amont du système de désembrouillage.

Dans le cas d'une optimisation de la compatibilité avec le modem V 27ter, les spécifications suivantes sont proposées pour le mode de repli :
- modulation :: modulation différentielle de phase à 8 états d'une porteuse à 1800 Hz
- rapidité de modulation :: 1600 bauds
- débit en ligne :: 4800 bit/s
- débit utile :: 3200 bit/s
- système de protection :: code correcteur d'erreurs de type convolutif, de rendement 2/3, systématique, entrelacé, autoorthogonal et à décodage à seuil.

Ce mode de repli permet au modem d'assurer un débit utile de 3200 bits par seconde, avec un taux d'erreur bit résiduel < 10⁻*⁷*.

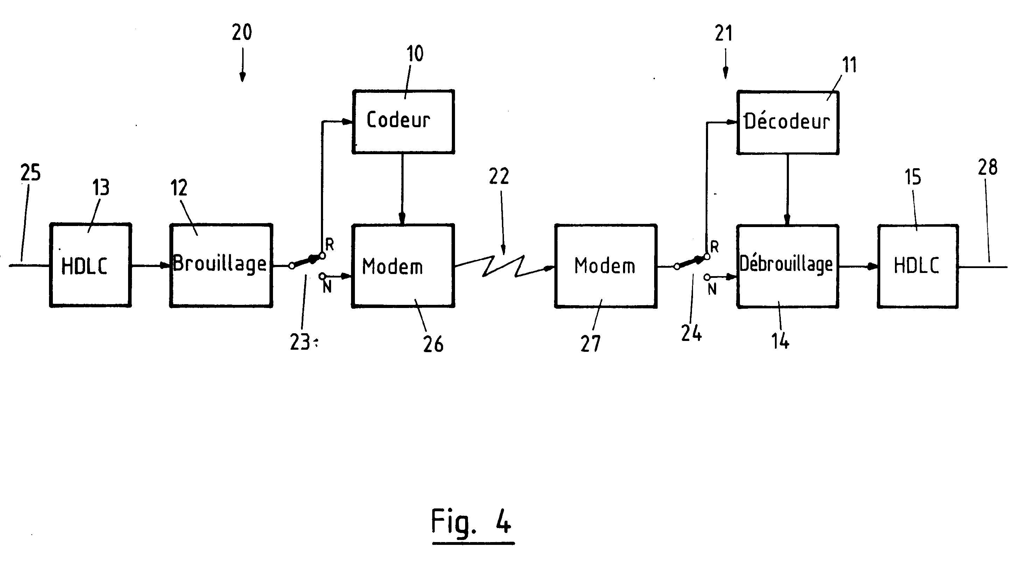

La figure 4 schématise une chaîne de transmission de données, incluant un ETCD d'émission 20 et un ETCD de réception 21 réunis par le réseau téléphonique commuté 22.

L'invention est schématisée par le fait que dans les deux ETCD 20 et 21 un système de commutation 23,24 respectivement, provoque le passage du système de transmission du mode normal N en mode de repli R. En mode normal, le train binaire source 25 traverse directement le module de codage de la porteuse 26 de l'ETCD émetteur 20. Symétriquement, dans l'ETCD récepteur 21, le signal reçu traverse le démodulateur 27 pour fournir le train de données restitué 28.

En cas de mode de repli, les moyens de commutation 23,24 introduisent dans la chaîne de transmission un module codeur supplémentaire 10 à l'émetteur, et un module décodeur supplémentaire 11 au récepteur.

Selon l'invention, le codage supplémentaire réalisé consiste à introduire dans le train binaire émis des moyens d'autocorrection sans modifier le principe de modulation. Comme on le verra ci-après, ce codage autocorrecteur est effectué dans le modem 26 lui-même. Par comparaison avec des méthodes de codage extérieur au modem, le principe retenu pour l'invention permet de simplifier mathématiquement la correction (par exemple 2 bits simplement à corriger au démodulateur, au lieu de 6 si le système d'autocorrection est situé à l'extérieur du système de brassage mentionné en préambule).

De façon avantageuse, mais non impérative, le signal utile 25 peut subir un traitement de brouillage (par exemple par brassage) 12 et/ou un traitement de formatage HDLC 13, avant la modulation 26. Dans ce cas, de façon symétrique, le signal reçu doit subir un traitement de débrouillage 14 et/ou d'extraction du formatage HDLC 15, après démodulation 27.

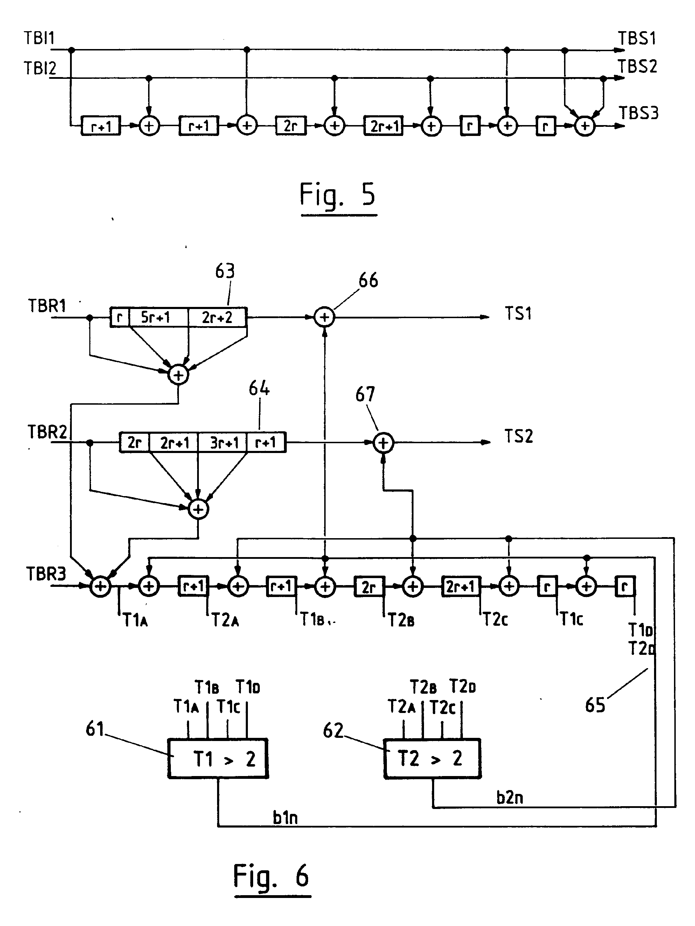

Les principes de fonctionnement du codeur 10 et du décodeur 11 sont illustrés respectivement en figures 5 et 6.

Comme il a été indiqué au paragraphe précédent, le codeur (10) est situé en aval de l'embrouilleur 12. Le train issu de l'embrouilleur au débit de 3200 bits/s est le train binaire incident (TBI) pour le codeur.

Notons :
- TBI1 la suite des bits de TBI de rang impair
- TBI2 la suite des bits de rang pair
- TBS1, TBS2, TBS3 les 3 séquences issues du codeur.

Le codeur utilise un code convolutif de rendement 2/3, autoorthogonal et systématique. Les séquences TBI1 et TBI2 ne sont pas modifiées par le code et sont rigoureusement identiques aux séquences sortantes TBS1 et TBS2. La séquence TBS3 constitue la redondance et est une combinaison linéaire des termes TBI1 et TBI2.

Les caractéristiques du code ont été particulièrement choisies pour la mise en oeuvre dans l'invention et notamment dans l'objectif d'obtenir une efficacité maximale sous contrainte de réaliser un système simple et compatible.

Ainsi, le fait de choisir un code de rendement 2/3, et plus généralement du rendement N-1/N, avec N correspondant au nombre d'états d'un élément binaire codé, permet de limiter la perte de débit occasionnée par l'émission des séquences redondantes d'autocorrection. Le principe de codage systématique et autoorthogonal garantit la non divergence du dispositif codeur, et simplifie sa réalisation en permettant de conserver tels quels les bits utiles, les éléments binaires d'autocorrection étant simplement insérés périodiquement entre les séquences correspondantes du train binaire source. L'entrelacement du codage peut avantageusement être ajusté en fonction des caractéristiques des perturbations affectant le canal. Les choix ainsi faits permettent d'utiliser un décodage à seuil au récepteur.

Le calcul de TBS3 est effectué de la manière suivante :
le bit de rang n de TBS3 est le résultat de la somme modulo 2 de :
- d'une part les bits de rang n, n-r, n-(6r+1), n-(8r+3) de TBI1
- d'autre part les bits de rang n, n-2r, n-(4r+1), n-(7r+2) de TBI2

où r est un facteur d'entrelacement dont la valeur est au moins égale à 2. La réalisation décrite en Fig.5 correspond au choix de r=8, pour des raisons expliquées plus loin.

Les bits de rang n de TBS1, TBS2, TBS3 constituent le n-ième tribit auquel sera associé un saut de phase de la porteuse conformément au mode de fonctionnement du modem V27ter.

Le décodeur 11 est situé en amont du désembrouilleur 14.

En relation avec la Fig.6, notons TBR1, TBR2, TBR3 les trains binaires correspondant aux trains TBI1, TBI2, TBI3 issus du codeur 10 et ayant été acheminés à travers le RTC 22.

Ces trois séquences sont transmises au décodeur 11 qui restitue deux séquences TS1 et TS2 qui sont formées par les trains reçus TBR1 et TBR2, éventuellement dûment corrigés avec l'aide de la séquence d'autocorrection TBR3 .

Chaque bit des trains TBR1 et TBR2 intervient dans 4 expressions de contrôle T1A, T1B, T1C, T1D et T2A, T2B, T2C, T2D respectivement, et est le seul à intervenir ainsi : les autres bits n'interviennent qu'une seule fois dans une des 4 expressions. Une décision majoritaire 61,62, permet donc de procéder à une détection d'erreur et la correction d'erreur s'effectue par inversion de polarité du bit détecté.

Notons b1n, b2n, b3n les bits de rang n de TBR1, TBR2 et TBR3.

Les bits b1n et b2n sont prélevés à partir du registres à décalage 63, 64.

b1n intervient dans les 4 expressions de contrôle Qn, Qn+r, Qn+(6r+1), Qn+(8r+3), respectivement T1A, T1B, T1C, T1D, dont l'écriture générale est : Qk=b1k + b1k-r + b1k-(6r+1) + b1k-(8r+3) + b2k +b2k-2r + b2k-(4r+1) + b2k-(7r+2) + b3k, modulo 2
dans laquelle k prend successivement les valeurs n, n+r, n+(6r+1), n+(8r+3). La valeur de ces expressions est issue de la ligne de traitement 65.

Le processus de correction de b1n est symbolisé par la porte OU exclusif 66.

En l'absence d'erreur la valeur des 4 expressions Qn, Qn+r, Qn+(6r+1), Qn+(8r+3) est 0.
- si le bit b1n est erroné, on aura Qn=Qn+r=Qn+(6r+1)=Qn(8r+3)=1,
   soit S=Qn + Qn+r + Qn+(6r+1) + Qn+(8r+3) = 4.
- si le bit b1n est erroné ainsi qu'un quelconque des autres bits intervenant dans le groupe de 4 expressions, une seule de ces expressions sera nulle et par conséquent S=3.

La correction de b1n se fera donc après calcul de la somme S et comparaison avec le seuil 2 (module 61) :
si S>2 on inverse la polarité de b1n ainsi que les expressions dans lesquelles b1n intervient

Le processus de correction de b2n est symbolisé par la porte OU exclusif 67.

Le bit b2n intervient dans les 4 expressions Qn, Qn+2r, Qn+(4r+1), Qn+(7r+2).

La correction de b2n se fait par un processus identique au précédent par comparaison de la somme S₂=Qn + Qn+2r + Qn+(4r+1) + Qn+(7r+2) avec le seuil 2 dans le module de comparaison 62.

Le paramètre r est un facteur d'entrelacement obligatoirement supérieur ou égal à 2. Sa valeur détermine d'une part la capacité du code à corriger des paquets d'erreurs et d'autre part la contrainte d'espacement entre 2 paquets d'erreurs consécutifs pour garantir un bon fonctionnement du système. Cet espacement peut être dénommé espace de garde.

Le code corrige 2 erreurs isolées et des paquets d'erreurs de longueur 3r pour un espace de garde de longueur 24r+15.

Il convient donc de fixer r de façon à ce que le compromis longueur de paquet d'erreurs-espace de garde soit optimal.

Le choix de r=8 qui correspond au mode de réalisation représenté favorise la capacité de correction de paquets d'erreurs, tout en maintenant un espace de garde inférieur à une durée de 50 ms ce qui garantit la correction de tous les paquets d'erreurs induits par les impulsions de taxation du RTC qui semblent constituer le cas le plus critique.

Toutefois un choix de r=4 par exemple, serait aussi un compromis acceptable.

Des maquettes de laboratoire des ensembles de codage 10 et décodage 11 selon l'invention ont été réalisées et mises en oeuvre dans des modems V27ter types.

Par souci de simplification, ces ensembles de codage et décodage seront désignés par la suite "codeur" et "décodeur".

Le codeur est inséré sur la carte "modulateur" du modem type retenu, et le décodeur sur la carte "procédure réception" du même modem. Ils peuvent être mis en service ou non suivant les besoins. Durant les phases d'apprentissage des modems, ils sont hors service et totalement transparents.

Le débit utile est ramené à 3200 bps lorsque le procédé de correction est utilisé mais la vitesse de transmission en ligne reste à 4800 bps.

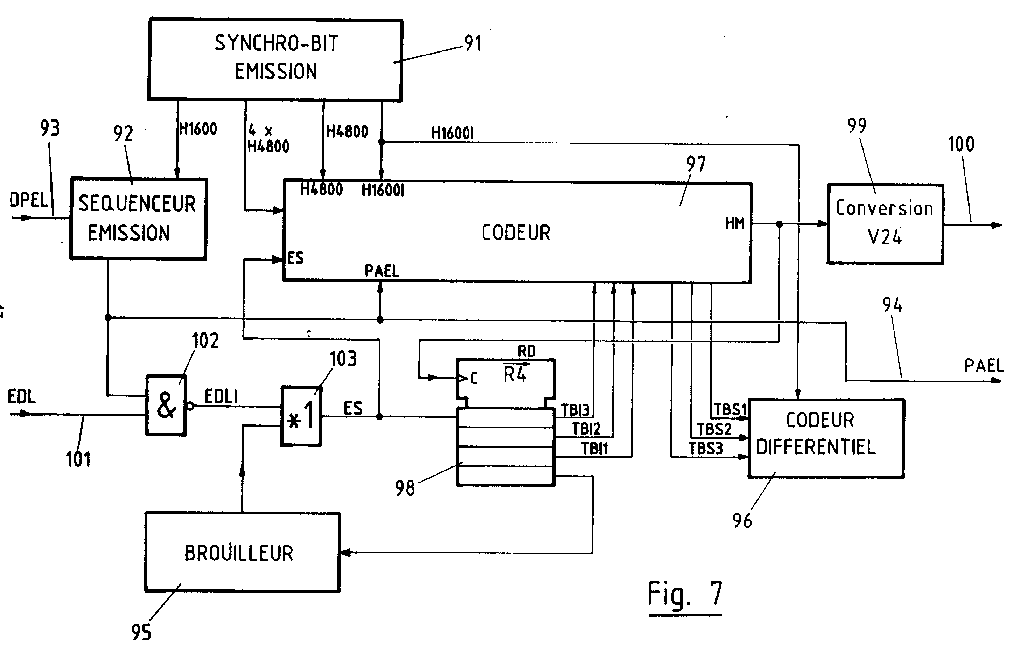

Comme représenté en Figure 7, la carte modulateur a pour fonction d'élaborer le signal analogique à émettre en ligne à partir des commandes d'émission et des données du terminal.

Elle comporte plusieurs sous-ensembles fonctionnels dont :
- la synchro-bit émission 91, qui synchronise les différents rythmes de la carte et l'horloge émission sur la base de temps externe ;
- le séquenceur émission 92 qui commande, après le passage à 1 du signal DPEL 93 (Demande pour émettre en ligne logique), l'émission d'une séquence de synchronisation avant d'activer la commande PAEL 94 (Prêt à émettre logique) ;
- le brouilleur 95 et son circuit de garde ;
- le codeur différentiel 96 qui détermine les valeurs de la phase de la porteuse à 1800 Hz à partir des données à transmettre.
- le codeur 97 spécifique de l'invention , qui assure le codage c'est-à-dire la transformation des débits en tribits. Il comporte la liaison de distribution de l'horloge H4800 et les liaisons entre le registre à décalage 98 de formation des tribits et le codeur différentiel 96.

Le module synchro-bit émission 91 fournit les signaux d'horloge 4xH4800 et H4800.

A partir de l'horloge H4800 est fabriquée l'horloge H1600 utilisée par le séquenceur 92 ainsi que l'horloge inverse H16001 utilisée par le codeur différentiel 96.

L'horloge H4800 est distribuée vers le brouilleur 95 et vers d'autres cartes du modem.

Elle est également fournie, après conversion 99 aux niveaux V24(+ 12V, - -12V), à l'équipement terminal de traitement de données (ETTD) 100;

L'ensemble séquenceur émission 92 génère les séquences d'apprentissage émises préalablement aux données ainsi que la séquence de fin de message. Il est déclenché par le passage à l'état 1 du signal DPEL 93.

Lorsque le signal DPEL 93 passe à l'état 0, PAEL 94 passe à 0 immédiatement et le modulateur émet un état 1 brouillé pendant une durée déterminée par le séquenceur 92.

Le train de bits à émettre arrive par l'entrée EDL 101 (Emission de données logique).

Cette entrée EDL est reliée à l'entrée d'une porte NAND 102.

Lorsque PAEL est à l'état 0, la sortie de cette porte NAND est en permanence à l'état 1.

Lorsque PAEL est à l'état 1, le signal EDLI (inverse EDL) est appliqué à l'entrée d'un circuit 103 réalisant le OU EXCLUSIF entre la sortie du brouilleur 95 et le signal EDLI.

Le signal ES, disponible en sortie du OU EXCLUSIF 103 est appliqué au registre à décalage RD 98 qui fournit en sortie les tribits.

Chaque bit est échantillonné sur le front montant du signal d'horloge H4800.

Le but du codeur différentiel 96 est de réaliser la correspondance entre les tribits présents à son entrée et la variation de phase à effectuer sur la porteuse. L'échantillonnage de cette variation de phase est réalisée sur le front montant de l'horloge H16001.

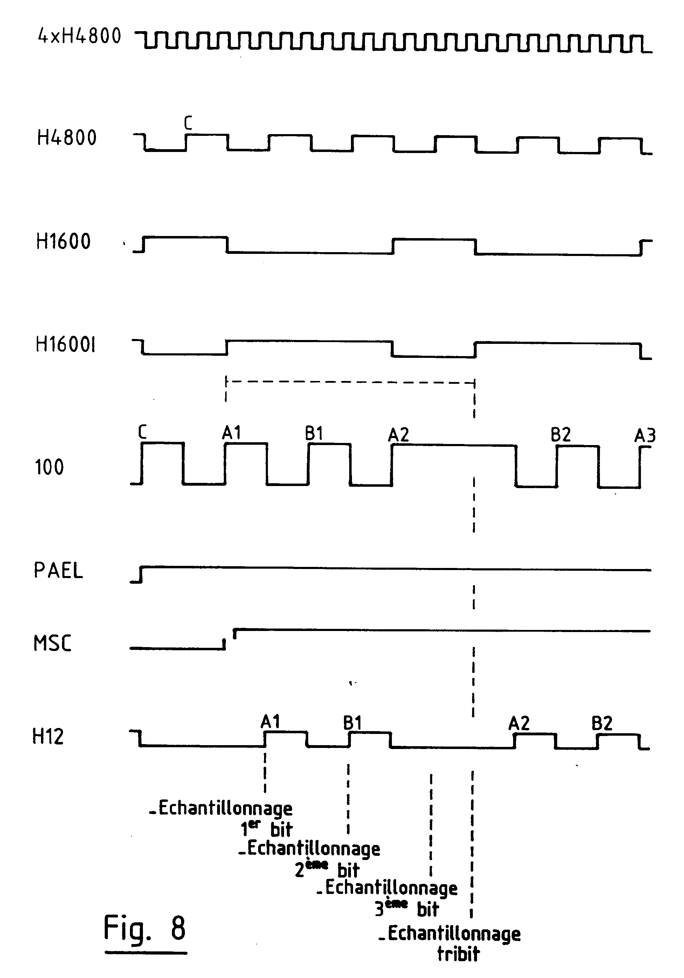

La figure 8 donne le chronogramme des signaux essentiels mentionnés ci-après pour commenter le fonctionnement du modulateur muni du codeur 97.

La mise en service du codeur 97 doit s'effectuer après l'activation du signal PAEL 94, plus précisément entre l'instant d'échantillonnage du tribit qui suit la montée de PAEL et l'instant d'échantillonnage du premier bit du prochain tribit.

Un signal de mise en service (MSC) est donc formé à partir du signal PAEL synchronisé par la combinaison ET logique des horloges H16001 et 4xH4800.

Quand le codeur est en service, la vitesse de transmission en ligne reste à 4800 bps, mais le troisième bit de chaque tribit étant fourni par le codeur, il est nécessaire de ramener le débit utile à 3200 bps.

Celà implique de modifier l'horloge d'émission fournie à l'ETTD 100 ainsi que l'horloge d'échantillonnage bit sur le registre à décalage RD de la carte modulateur.

Un signal d'horloge H12 est élaboré à cet effet à partir des horloges H4800 et H16001.

C'est le signal H12 qui est fourni sur la sortie HM du codeur 97 lorsque ce dernier est en service.

La fonction de codage traite des dibits. Ceux-ci sont formés au sein du codeur par registres à décalage internes au codeur 97, à partir de l'entrée série ES et au rythme de l'horloge H12.

Le tribit formé est fourni sur les sorties TBS1, TBS2, et TBS3 du codeur 97 quand celui-ci est en service.

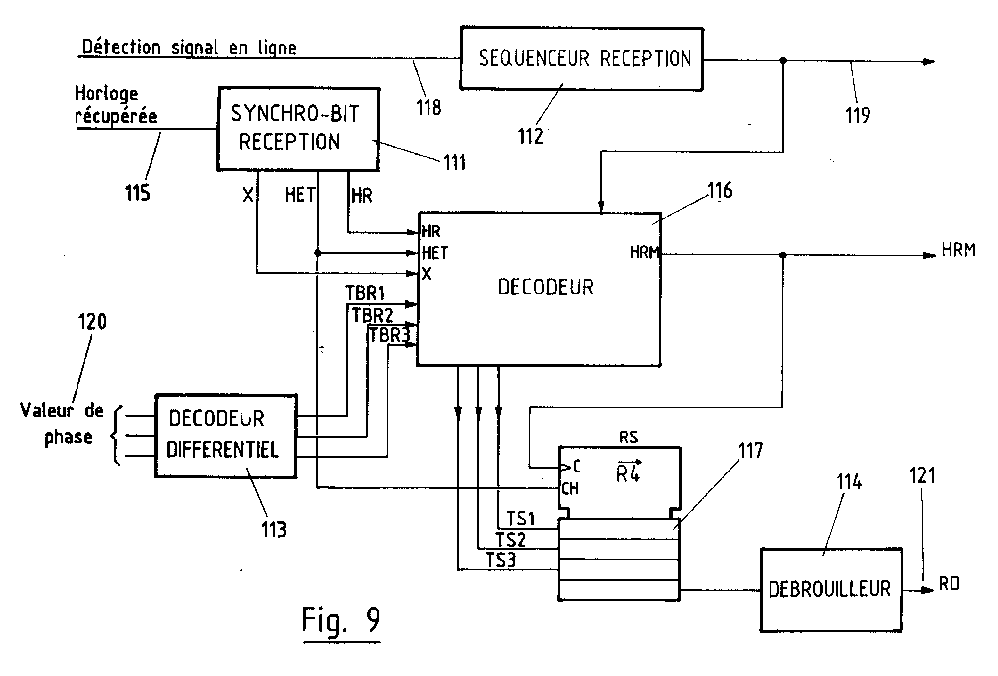

La carte procédure réception représentée en Fig.9 produit les rythmes de base nécessaires au modem, l'horloge du démodulateur, les commandes de l'égaliseur et du démodulateur, le codage numérique du signal réception, le signal "Recéption données".

Elle comprend parmi ses sous-ensembles fonctionnels :
- la synchro-bit réception 111 qui synchronise les rythmes du démodulateur et de l'égaliseur sur l'horloge récupérée ;
- le séquenceur réception 112 qui délivre à l'égaliseur et au démodulateur les commandes nécéssaires au traitement numérique du signal réception ;
- le décodeur 113 qui fournit les tribits à partir des sauts de phase détectés en amont par le démodulateur ;
- le débrouilleur 114 qui délivre le signal RD 121 (Réception Données) ;
- le décodeur 116 qui réalise l'adaptation aux autres modules de la carte, et qui assure le décodage proprement dit, c'est-à-dire la détection et la correction des erreurs sur les dibits utiles.

A partir du signal "Horloge Récupérée" 115, sont élaborés les signaux nécessaires au traitement des tribits en réception et en particulier les signaux HR (Horloge Réception), HE8 et X.
Le signal HR est distribué vers le décodeur 116 et le registre de sérialisation 117 où il est utilisé comme horloge de chargement parallèle.

La détection d'un signal en ligne 118 provoque l'initialisation du séquenceur réception 112 et l'activation d'un signal 119 qui active un circuit de détection de porteuse (non représenté).

Les valeurs de phase 120 sont délivrées à la carte procédure réception par le démodulateur. Le décodeur différentiel 113 réalise la correspondance entre sauts de phase et tribits.

Ces tribits sont appliqués sur le registre de sérialisation RS 117 dont la sortie est reliée au débrouilleur 114.

Ils sont chargés lorsque le signal HE8 est à l'état haut et sur un front du signal d'horloge HR. Le décalage du tribit dans le registre 117 s'effectue ensuite sur un front montant HR et alors que HE8 est à l'état 0.

Le signal RD est disponible en sortie du débrouilleur 114 et est délivré à l'ETTD.

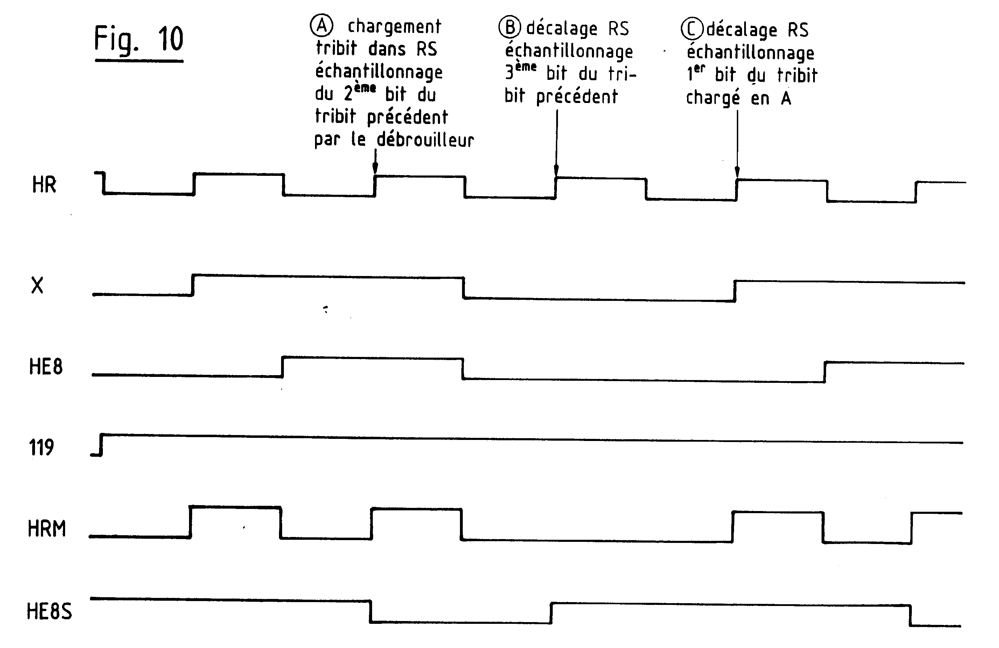

La figure 10 donne le chronogramme des signaux essentiels mentionnés ci-après pour commenter le fonctionnement de la carte procédure réception équipée du décodeur 116.

La mise en service du décodeur 116 s'effectue après le passage à l'état 1 du signal 119. Il faut toutefois remarquer que les premiers dibits fournis en sortie du décodeur sont de configuration 00 tant que le premier tribit, reçu après la mise en service, n'a pas parcouru la totalité des registres à décalage du décodeur.

Dans l'état hors service, le décodeur 116 est transparent et restitue sur les sorties HRM, TS1, TS2, TS3 les signaux présents sur les entrées HR, TBR1, TBR2, TBR3.

Durant le fonctionnement du décodeur, ce sont les dibits qui sont fournis au registre RS 117 de la carte procédure réception.

De plus, comme pour l'émission, l'horloge réception délivrée à l'ETTD doit être ramenée à 3200 bps.

Une horloge HRM, combinaison logique ET des horloges HR et X remplace donc HR sur la sortie HRM du décodeur 116.

Le chargement et la circulation des tribits dans les registres à décalage du décodeur sont déclenchés par le front descendant d'une horloge HE8S.
HE8S est constituée à partir de l'horloge HE8 synchronisée par HR et inversée.

Enfin, le décodeur 116 est mis hors service dès la retombée du signal 119, ce qui oblige dans cette maquette de réalisation à terminer l'émission par des données de bourrage jusqu'à ce que les derniers dibits utiles aient traversé l'ensemble des registres du décodeur 116.

Un test du système autocorrecteur de l'invention a été réalisé au moyen d'un équipement T.A.S. 1000 fabriqué par la société américaine T.A.S.

Un test d'immunité au bruit impulsif a été d'abord réalisé dans les conditions suivantes : pour un niveau d'émission de -11 dBm, le bruit impulsif simulé correspond à l'espace existant entre les deux impulsions induites par un créneau de taxation qui a une durée de 100 ms sur le RTC.

Les résultats ont été les suivants :
- sans auto-correction on obtient un taux d'erreur bit de 10⁻*²*
   un taux d'erreur bloc de 1
- avec auto-correction on obtient un taux d'erreur bit inférieur ou égal à 2 * 10⁻*⁸* car le résultat obtenu a été 0 erreurs pour 5000 blocs de 10000 bits reçus chacun.

Le taux d'erreur bloc est inférieur ou égal à 2 * 10⁻*⁴*, ce qui permet de constater que toutes les erreurs produites en ligne sont corrigées.

Un second test d'immunité au bruit impulsif superposé au bruit blanc a également été réalisé.

Le bruit blanc a pour but de générer des erreurs dans l'espace de garde du décodeur, et le bruit impulsif a pour but de générer des paquets d'erreurs consécutives.

Le rapport signal à bruit blanc a donc été fixé à 15 dB, et la récurrence a été portée à une valeur du triple de la longueur temporelle de l'espace de garde soit 150 ms afin de décoreller au mieux chaque évènement "impulsion".

Résultats :
- sans auto-correction, on obtient un taux d'erreur bit de 7 * 10⁻*³*
   un taux d'erreur bloc de 1
- avec auto-correction, on obtient un taux d'erreur égal à 1,6 * 10⁻*⁶*
   un taux d'erreur bloc de 10⁻*²*
- on observe en ligne jusqu'à 5 tribits consécutifs erronés.

Ainsi, avec un paramètre r supérieur ou égal à 5, on se prémunit efficacement contre les erreurs observées. Le compromis entre la longueur de l'espace de garde et la capacité de correction d'un train binaire erroné, qui est confortable puisque r=8, permet de se prémunir au mieux du bruit impulsif tout en ayant de bonnes performances de tenue au bruit blanc.

## Revendications

1. Système de transmission de données comprenant des équipements de terminaison de circuits de données, chacune desdits équipements de terminaison de circuits de données (20,21) comprenant d'une part des premiers moyens de transmission (26) selon un mode normal, et d'autre part des seconds moyens de transmission (10,26) selon au moins un mode de repli sélectivement activés notamment en cas de perturbation importante de la ligne de transmission (22), lesdits premiers moyens de transmission selon un mode normal comprenant des premiers moyens (26) de modulation/démodulation d'au moins une première fréquence porteuse de transmission au moyen d'un premier train binaire source (TBi 1, TBi2),
caractérisé en ce que lesdits seconds moyens de transmission selon au moins un mode de repli comprennent des moyens (10 ; 97) de construction d'un second train binaire (TBS1, TBS2, TBS3) en ajoutant aux données dudit premier train binaire source (TBi1, TBi2) des données supplémentaires d'autocorrection (TBS3), et des moyens (26) de modulation/démodulation d'au moins une seconde fréquence porteuse de transmission au moyen dudit second train binaire,
et en ce que lesdites données supplémentaires d'autocorrection (TBS3) sont constituées par des éléments binaires d'autocorrection élaborés à partir dudit premier train binaire source par mise en oeuvre d'un code correcteur d'erreurs de type systématique, lesdits éléments binaires d'autocorrection (TBS3) étant insérés entre des séquences d'origine d'éléments binaires du premier train binaire source (TBi1,TBi2).

2. Système selon la revendication 1, caractérisé en ce que ledit code correcteur d'erreurs est du type convolutif.

3. Système selon la revendication 1 ou 2, caractérisé en ce que chaque élément numérique de modulation de ladite seconde fréquence porteuse s'exprime sur N états, et en ce que ledit code correcteur d'erreurs utilisé est de rendement (N-1)/N.

4. Système selon la revendication 3, caractérisé en ce que ledits moyens de construction dudit second train binaire (TBS1, TBS2, TBS3) comprennent des moyens permettant de regrouper par (N-1)-uplets des bits (TBI1, TBI2) d'origine dudit premier train binaire, et des moyens de concaténation de chaque (N-1)-uplet de bits d'origine avec un N-ième bit d'autocorrection (TBS3).

5. Système suivant l'une quelconque des revendications 2 à 4, caractérisé en ce que lesdits seconds moyens de transmission selon au moins un mode de repli comprennent des moyens (11 ; 116) de décodage d'un second train binaire reçu (TBR3), lesdits moyens de décodage mettant en oeuvre un décodage à seuil.

6. Système selon l'une quelconque des revendications 2 à 5, caractérisé en ce que chacun des éléments numériques de modulation de ladite seconde fréquence porteuse est un tribit, et en ce que ledit code correcteur est de type entrelacé de façon que chaque tribit émis par lesdits seconds moyens de transmission selon au moins un mode de repli sécurisé soit constitué d'un doublet de bits d'origine du premier train binaire source, et d'un troisième bit de redondance, le bit de redondance dudit tribit de rang j du second train binaire étant un bit d'autocorrection égal au résultat de la somme modulo 2 de :
- d'une part les bits impairs des doublets de rang j, j-r, j-(6r+1), j-(8r+3) dans ledit premier train binaire source, et
- d'autre part les bits pairs des doublets de rang j, j-2r, j-(4r+1), j-(7r+2) dans ledit premier train binaire source,
où r est un facteur d'entrelacement dont la valeur est au moins égale à 2.

7. Système selon la revendication 6, caractérisé en ce que lesdits seconds moyens de transmission selon au moins un mode de repli comprennent des moyens permettant d'ajuster la valeur dudit facteur d'entrelacement en fonction des caractéristiques du canal de transmission.

8. Système selon la revendication 1, caractérisé en ce que ladite première fréquence porteuse est égale à ladite seconde fréquence porteuse.

9. Système selon l'une quelconque des revendications 1 à 8, caractérisé en ce que lesdits premiers moyens de transmission selon un mode normal comprennent des moyens (12) permettant d'effectuer un traitement de brassage d'un signal numérique source et délivrant ledit premier train numérique source.

10. Système selon l'une quelconque des revendications 1 à 9, caractérisé en ce que ledit premier train numérique source est constitué de trames numériques fournies par un circuit de mise en oeuvre d'un protocole de formatage dudit signal numérique source, notamment de type HDLC ou analogue.

11. Système selon l'une quelconque des revendications 1 à 10, caractérisé en ce que ledit mode normal de fonctionnement desdits premiers moyens de transmission (26) appartient au groupe comprenant les normes V23, V27 ter, V29, V32 et V33 CCITT.

12. Utilisation du système selon l'une quelconque des revendications 1 à 11 aux transmissions de données sur le réseau téléphonique commuté.

## Patentansprüche

1. Datenübertragungssystem, das Datenschaltkreisendgeräte enthält, wobei jedes dieser Datenschaltkreisendgeräte (20, 21) einerseits erste Übertragungsmittel (26) für einen Normal modus umfaßt und andererseits zweite Übertragungsmittel (10, 26) für mindestens einen Rückzugsmodus, der selektiv aktiviert wird, insbesondere im Falle einer umfangreichen Störung der Übertragungsleitung (22), wobei die ersten Normalmodus-Übertragungsmittel über erste Modulations-/Demodulationsmittel (26) für mindestens eine erste Trägerfrequenz mittels eines ersten Quellbinärzuges (TBi1, TBi2) verfügen,
dadurch gekennzeichnet, daß die zweiten Übertragungsmittel für den mindestens einen Rückzugsmodus Mittel (10; 97) umfassen für den Aufbau eines zweiten Binärzuges (TBS1, TBS2, TBS3) durch Hinzufügen zusätzlicher Selbstkorrekturdaten (TBS3) zu den Daten des ersten Quellbinärzuges (TBi1, TBi2), und über Modulations-/Demodulationsmittel (26) für mindestens eine zweite Trägerfrequenz mittels des zweiten Binärzuges verfügen, und dadurch, daß die Selbstkorrektur-Zusatzdaten (TBS3) aus binären Selbstkorrekturelementen bestehen, die aufgebaut werden ausgehend von dem ersten Quellbinärzug durch Anwendung eines systematischen Fehlerberichtigungscodes, wobei die Selbstkorrekturbinärelemente (TBS3) zwischen Ursprungssequenzen des ersten Quellbinärzuges (TBi1, TBi2) eingefügt werden.

2. System gemäß Anspruch 1,
dadurch gekennzeichnet, daß der Fehlerkorrekturcode gefaltet ist.

3. System gemäß Anspruch 1 oder 2,
dadurch gekennzeichnet, daß jedes digitale Modulationselement der zweiten Trägerfrequenz über N Zustände ausgedrückt wird und dadurch, daß der angewandte Fehlerkorrekturcode einen Ausstoß von (N-1)/N hat.

4. System gemäß Anspruch 3,
dadurch gekennzeichnet, daß die Aufbaumittel des zweiten Binärzuges (TBS1, TBS2, TBS3) Mittel umfassen, die die Umgruppierung der Ursprungsbits (TBI1, TBI2) des ersten Binärzuges in (N-1)-tupel ermöglichen sowie Mittel zur Verkettung jedes Ursprungsbit-(N-1)-tupels mit einem N. Selbstkorrekturbit (TBS3).

5. System gemäß irgendeinem der Ansprüche 2 bis 4,
dadurch gekennzeichnet, daß die zweiten Übertragungsmittel für den mindestens einen Rückzugsmodus Mittel (11; 116) zum Dekodieren eines zweiten empfangenen Binärzuges (TBR3) umfassen, wobei die Dekodierungsmittel eine Schwellendekodierung anwenden.

6. System gemäß irgendeinem der Ansprüche 2 bis 5,
dadurch gekennzeichnet, daß jedes der digitalen Modulationselemente der zweiten Trägerfrequenz ein Bit-Tripel ist und dadurch, daß der Korrekturcode von der Zeilensprungverfahrensart ist, so daß jedes der Bit-Tripel, die von den zweiten Übertragungsmitteln für den mindestens einen gesicherten Rückzugsmodus gesendet werden, aus einem 2-Tupel aus Ursprungsbits des ersten Quellbinärzuges besteht und aus einem dritten Redundanzbit, wobei das Redundanzbit des Bit-Tripels vom Rang j des zweiten Binärzuges ein Selbstkorrekturbit ist, welches der Modulo 2 Summe von
- einerseits den ungeraden Bits der 2-Tupels vom Rang j, j-r, j-(6r+1), j-(8r+3) im ersten Quellbinärzug und
- andererseits den geraden Bits der 2-Tupels vom Rang j, j-2r, j-(4r+1), j-(7r+2) im ersten Quellbinärzug
entspricht, wobei r ein Zeilensprungverfahrensfaktor ist, dessen Wert mindesten 2 beträgt.

7. System gemäß Anspruch 6,
dadurch gekennzeichnet, daß die zweiten Übertragungsmittel für den mindestens einen Rückzugsmodus Mittel umfassen, die das Anpassen des Wertes des Zeilensprungverfahrensfaktors in Abhängigkeit von den Eigenschaften des Übertragungskanals ermöglichen.

8. System gemäß Anspruch 1,
dadurch gekennzeichnet, daß die erste Trägerfrequenz der zweiten Trägerfrequenz gleich ist.

9. System gemäß irgendeinem der Ansprüche 1 bis 8,
dadurch gekennzeichnet, daß die ersten Normalmodusübertragungsmittel über Mittel (12) verfügen, die das Durchmischen eines digitalen Quellsignals ermöglichen und die den ersten Quelldigitalzug geben.

10. System gemäß irgendeinem der Ansprüche 1 bis 9,
dadurch gekennzeichnet, daß der erste Quelldigitalzug aus digitalen Rastern besteht, die von einem Schaltkreis zur Betätigung eines Formatierungsprotokolls des digitalen Quellsignals abgegeben werden, insbesondere des HDLC- oder ähnlichen Typs.

11. System gemäß irgendeinem der Ansprüche 1 bis 10,
dadurch gekennzeichnet, daß der normale Funktionsmodus der ersten Übertragunsgmittel (26) der Gruppe angehört, welche die Normen V23, V27 ter, V29, V32 und V33 CCITT umfaßt.

12. Anwendung des Systems gemäß irgendeinem der Ansprüche 1 bis 11 für die Datenübertragung im Telefonnetz.

## Claims

1. Data transmission system comprising data circuit termination equipment, each of the said data circuit termination equipment (20, 21) comprising on the one hand first means of transmission (26) in a normal mode, and on the other hand second means of transmission (10, 26) in at least one alternative mode selectively activated especially in the event of a large disturbance of the transmission line (22), the said first means of transmission in a normal mode comprising first means (26) of modulation/demodulation of at least one first transmission carrier frequency by means of a first source binary train (BTi 1, BTi2),
characterized in that the said second means of transmission in at least one alternative mode comprise means (10; 97) of constructing a second binary train (BTS1, BTS2, BTS3) by adding supplementary self-correcting data (BTS3) to the data of the first source binary train (BTi1, BTi2), and means (26) of modulation/demodulation of at least one second transmission carrier frequency by means of the said second binary train,
and in that the said supplementary self-correcting data (BTS3) consist of binary self-correcting elements derived from the said first source binary train by employing an error correcting code of systematic type, the said binary self-correcting elements (BTS3) being inserted between original sequences of binary elements of the first source binary train (BTi1, BTi2).

2. System according to Claim 1, characterized in that the said error correcting code is of the convolutive type.

3. System according to Claim 1 or 2, characterized in that each digital element for modulating the second carrier frequency is expressed over N states, and in that the said error correcting code used has efficiency (N-1)/N.

4. System according to Claim 3, characterized in that said means of constructing the said second binary train (BTS1, BTS2, BTS3) comprise means allowing the grouping into (N-1)-uplets of the original bits (BTI1, BTI2) of the first binary train, and means for concatenating each (N-1)-uplet of original bits with an N-th self-correcting bit (BTS3).

5. System in accordance with any one of Claims 2 to 4, characterized in that the said second means of transmission in at least one alternative mode comprise means (11; 116) for decoding a second received binary train (BTR3), the said decoding means employing a threshold decoding.

6. System according to any one of Claims 2 to 5, characterized in that each of the digital elements for modulating the said second carrier frequency is a tribit, and in that the said correcting code is of interlaced type so that each tribit sent by the said second means of transmission in at least one secure alternative mode consists of a doublet of original bits of the first source binary train, and of a third redundancy bit, the redundancy bit of the said tribit of rank j of the second binary train being a self-correcting bit equal to the result of the sum modulo 2 of:
- on the one hand the odd bits of the doublets of rank j, j-r, j-(6r+1), j-(8r+3) in the said first source binary train, and
- on the other hand the even bits of the doublets of rank j, j-2r, j-(4r+1), j-(7r+2) in the said first source binary train,
where r is an interlacing factor whose value is at least equal to 2.

7. System according to Claim 6, characterized in that the said second means of tranmission in at least one alternative mode comprise means allowing adjustment of the value of the said interlacing factor as a function of the characteristics of the transmission channel.

8. System according to Claim 1, characterized in that the said first carrier frequency is equal to the said second carrier frequency.

9. System according to any one of Claims 1 to 8, characterized in that the said first means of transmission in a normal mode comprise means (12) making it possible to form a mixing processing of a digital source signal and delivering the said first digital source train.

10. System according to any one of Claims 1 to 9, characterized in that the said first digital source train consists of digital frames provided by a circuit for implementing a protocol for formatting the said digital source signal, in particular of the HDLC or similar type.

11. System according to any one of Claims 1 to 10, characterized in that the said normal mode of operation of the said first means of transmission (26) belong to the group comprising the V23, V27ter, V29, V32 and V33 CCITT standards.

12. Use of the system according to any one of Claims 1 to 11 for data transmissions over the switched telephone network.
